# EUROPEAN PATENT APPLICATION

(11) **EP 4 822 505 A1**
(43) Date of publication of application: **14.10.2026**
(21) Application number: 24899753.8
(22) Date of filing: 29.11.2024
(51) Int. Cl.: G06F 3/0484

(54) **METHOD AND APPARATUS FOR IMAGE GENERATION, DEVICE, AND STORAGE MEDIUM**

(30) Priority: 08.12.2023 CN 202311685883
(71) Applicant: Beijing Zitiao Network Technology Co., Ltd., Beijing 100190 (CN); Lemon Inc., Grand Cayman, KY1-1205 (KY)
(72) Inventor: CHEN, Jiajun, Beijing 100028 (CN); BUZINOVER, Michael, CULVER CITY California 90230 (US); LIU, Xu, Beijing 100028 (CN); LI, Cheng, Beijing 100028 (CN); LYU, Guowei, CULVER CITY California 90230 (US); WANG, Xiaolu, Beijing 100028 (CN); ZHAO, Shuanglin, Beijing 100028 (CN); ZHAO, Yixin, CULVER CITY California 90230 (US); LIU, Jing, Los Angeles, California 90066 (US); SANG, Shen, Los Angeles, California 90066 (US); HUANG, Youcai, Beijing 100028 (CN); ZHANG, Chenliang, Beijing 100028 (CN); LAI, Chunpong, Los Angeles, California 90066 (US); GUZI, Jonathan, CULVER CITY California 90230 (US); CHEN, Siding, Los Angeles, California 90066 (US); YANG, Tianyu, Los Angeles, California 90066 (US); LI, Shuang, Los Angeles, California 90066 (US); SRIMANNARAYANAN, Ashwin Badri, Los Angeles, California 90066 (US); CHEN, Jeffrey Jia-Jun, Los Angeles, California 90066 (US); RATHI, Ajit, Los Angeles, California 90066 (US)
(74) Representative: Marks & Clerk LLP
(86) International application number: PCT/CN2024/135913
(87) International publication number: WO 2025/119113

(57) **Abstract**

According to the embodiments of the present disclosure, a method, an apparatus, a device and a storage medium for image generation are provided. The method includes: presenting a first image of a first virtual avatar and an element use entry of a first element, the first virtual avatar including media data representing an appearance feature of a first object, where the first image of the first virtual avatar has the first element; and presenting a second image of a second virtual avatar based on a trigger on the element use entry, the second virtual avatar including media data representing an appearance feature of a second object, where the second image of the second virtual avatar has the first element. In this way, interactivity between different users is enhanced, thereby improving social experience and interestingness.

## Description

The present application claims priority to Chinese Patent Application No. 202311685883.X, filed on December 08, 2023, and entitled "METHOD, APPARATUS, DEVICE, AND STORAGE MEDIUM FOR IMAGE GENERATION", which is incorporated herein by reference in its entirety.

### TECHNICAL FIELD

Example embodiments of the present disclosure generally relate to the field of computers, and in particular, to a method, an apparatus, a device, and a computer-readable storage medium for image generation.

### BACKGROUND

With the development of computer technologies, content sharing applications are designed to provide various services for users. In such applications, interaction between different users may be realized by means of content. For example, a user may browse, comment on, and forward various types of content posted by other users in an application, including various media content such as videos, images, image sets, and audio. How to increase interactivity between users in such applications is an important issue of concern.

### SUMMARY

In a first aspect of the present disclosure, a method of image generation is provided. The method includes: presenting a first image of a first virtual avatar and an element use entry of a first element, the first virtual avatar including media data representing an appearance feature of a first object, where the first image of the first virtual avatar has the first element; and presenting a second image of a second virtual avatar in response to a trigger on the element use entry, the second virtual avatar including media data representing an appearance feature of a second object, where the second image of the second virtual avatar has the first element.

In a second aspect of the present disclosure, an apparatus for image generation is provided. The apparatus includes: a first presenting module configured to present a first image of a first virtual avatar and an element use entry of a first element, the first virtual avatar including media data representing an appearance feature of a first object, where the first image of the first virtual avatar has the first element; and a second presenting module configured to present a second image of a second virtual avatar in response to a trigger on the element use entry, the second virtual avatar including media data representing an appearance feature of a second object, where the second image of the second virtual avatar has the first element.

In a third aspect of the present disclosure, an electronic device is provided. The device includes at least one processing unit; and at least one memory coupled to the at least one processing unit and storing instructions executable by the at least one processing unit, the instructions, when executed by the at least one processing unit, causing the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It would be appreciated that the content described in this summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 illustrates a schematic diagram of an example environment in which the embodiments of the present disclosure may be implemented;
FIGS. 2A to 2Z illustrate schematic diagrams of example interfaces for virtual avatar creation according to some embodiments of the present disclosure;
FIGS. 3A to 3I illustrate schematic diagrams of example interfaces for reusing a style according to some embodiments of the present disclosure;
FIGS. 4A to 4E illustrate schematic diagrams of example interfaces for style adjustment according to some embodiments of the present disclosure;
FIGS. 5A to 5J illustrate schematic diagrams of example interfaces for providing style adjustment information according to some embodiments of the present disclosure;
FIG. 6 illustrates a flowchart of a process of image generation according to some embodiments of the present disclosure;
FIG. 7 illustrates a flowchart of an apparatus for image generation according to some embodiments of the present disclosure; and
FIG. 8 illustrates a block diagram of an electronic device in which one or more embodiments of the present disclosure may be implemented.

### DETAILED DESCRIPTION OF EMBODIMENTS

The embodiments of the present disclosure will be described in more detail below with reference to the drawings. Although some embodiments of the present disclosure are shown in the drawings, it would be appreciated that the present disclosure may be implemented in various forms and should not be construed as being limited to the embodiments set forth herein; instead, these embodiments are provided for a more thorough and complete understanding of the present disclosure. It would be appreciated that the drawings and embodiments of the present disclosure are only for illustrative purposes, and are not intended to limit the protection scope of the present disclosure.

In the description of the embodiments of the present disclosure, the term "include/comprise" and similar terms thereof should be understood as open-ended inclusion, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below.

In this text, unless explicitly stated, "in response to A" performing a step does not mean that the step is performed immediately after "A", but may include one or more intermediate steps.

It would be appreciated that the data involved in the technical solution (including but not limited to the data itself, acquisition or use of the data) should comply with requirements of corresponding laws, regulations, and related provisions.

It would be appreciated that before using the technical solution disclosed in the embodiments of the present disclosure, the user shall be informed of the type, range of use, use scenarios, etc., of personal information involved in the present disclosure and the authorization of the user shall be obtained in an appropriate manner in accordance with relevant laws and regulations.

For example, in response to receiving an active request from a user, prompt information is sent to the user to clearly prompt the user that the requested operation will require access to and use of the user's personal information, so that the user may independently choose whether to provide the personal information to software or hardware, such as an electronic device, an application, a server, or a storage medium, that performs the operations of the technical solution of the present disclosure based on the prompt information.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to select "agree" or "disagree" to provide the personal information to the electronic device.

It would be appreciated that the above processes of notifying and obtaining user authorization are only illustrative and do not limit the implementations of the present disclosure, and other methods that meet relevant laws and regulations may also be applied to the implementations of the present disclosure.

As briefly mentioned above, a user may browse, comment on, and forward media content posted by other users in an application, thereby interacting with the other users. With the development of machine learning technologies, digital tools based on machine learning models have been used to create virtual avatars for users. Users may also use the virtual avatars to generate images. However, in such a solution, different users independently generate their own images without interaction.

To this end, according to the embodiments of the present disclosure, an improved solution for image generation is proposed. According to the solution of the embodiments of the present disclosure, a first image of a first virtual avatar and an element use entry of a first element are presented, and the first virtual avatar includes media data representing an appearance feature of a first object. The first image of the first virtual avatar has the first element. A second image of a second virtual avatar is presented based on a trigger on the element use entry, and the second virtual avatar includes media data representing an appearance feature of a second object. The second image of the second virtual avatar has the first element.

According to the embodiments of the present disclosure, if a user views an image having a certain element that is generated by another user using a virtual avatar, the user may also use a virtual avatar associated with the user himself/herself to generate an image having the same or similar element. In this way, interactivity between different users is enhanced, thereby improving social experience and interestingness.

The example embodiments of the present disclosure are described below with reference to the drawings.

### EXAMPLE ENVIRONMENT

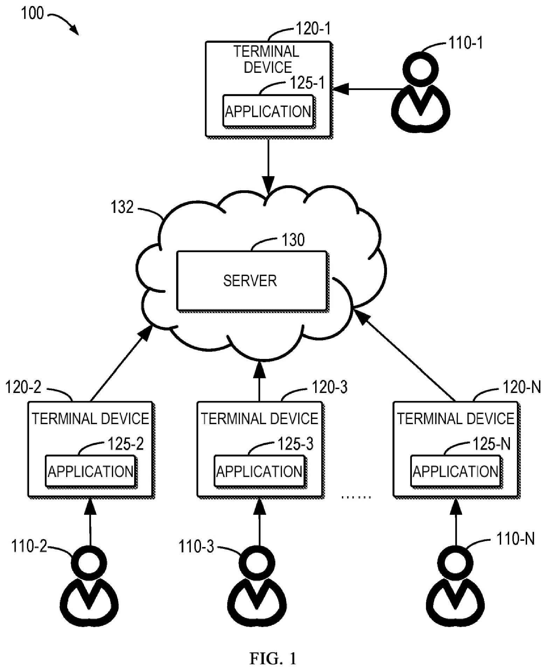

FIG. 1 illustrates a schematic diagram of an example environment 100 in which the embodiments of the present disclosure may be implemented. In the environment 100, one or more users 110-1, 110-2, 110-3, ..., 110-N may post and/or browse media data (which may also be referred to as multimedia content, multimedia data, media content, etc.) in a target platform via respective associated terminal devices 120-1, 120-2, 120-3, ..., 120-N.

For the convenience of discussion, the users 110-1, 110-2, 110-3, ..., 110-N may be collectively or individually referred to as a user 110, and the terminal devices 120-1, 120-2, 120-3, ..., 120-N may be collectively or individually referred to as a terminal device 120. In a media data posting scenario, the user 110 may also be referred to as a poster of the media data. In a media data browsing scenario, the user 110 may also be referred to as an observer, a browser, or a viewer of the media data.

A platform supporting media data posting and/or supporting media data playback may be installed on the terminal device 120. Such a platform may be, for example, an application or a website. The user 110 may operate the terminal device 120 to access the corresponding application or website. In some embodiments, the platform for posting the media data and the platform for playing the media data may be the same or different platforms. Illustratively, the user 110-1 performs editing and posting of media data on a first platform, and the posting operation indicates that the media data is posted to a second platform. The user 110-2 may browse the media data on the second platform.

In some embodiments, an application 125 supporting media data posting may be installed on the terminal device 120 (that is, the application 125-1 is installed on the terminal device 120-1, the application 125-2 is installed on the terminal device 120-2, the application 125-3 is installed on the terminal device 120-3, ..., and the application 125-N is installed on the terminal device 120-N). It should be noted that the applications 125 installed on different terminal devices 120 may be exactly the same application or may be different applications (for example, in different versions). The application 125 may be any appropriate application with a media data posting function, for example, a social application, a content sharing application, an office support application, etc.

In the environment 100 of FIG. 1, if the application 125 is in an active state, the terminal device 120 may present a user interface of the application 125. The user interface may include various interfaces that may be provided by the application 125, such as a user interface supporting message interaction, a user interface supporting content browsing, a message sending and receiving interface, etc. Via different user interfaces, the application 125 may provide different content to the user 110. Via an appropriate manner, such as clicking or selecting any appropriate interface element in the user interface, the application 125 may also provide the user 110 with a selection and switching of presentation modes of associated content.

In some embodiments, different terminal devices 120 may also communicate with the server 130 through the network 132 to realize the supply of message interaction services. The server 130 may provide functions such as management, configuration, and maintenance of the application 125.

The terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a television receiver, a radio broadcast receiver, an e-book device, a game device, or any combination of the foregoing, including the accessories and peripherals of these devices or any combination thereof. In some embodiments, the terminal device 120 may also support any type of user-oriented interface (such as a "wearable" circuit, etc.). The server 130 may be various types of computing systems/servers capable of providing computing power, including but not limited to mainframes, edge computing nodes, computing devices in cloud environments, etc.

It would be appreciated that the structures and functions of various components in the environment 100 are described only for the purpose of illustration, and do not imply any limitation on the scope of the present disclosure. Various example implementations of the present disclosure will be described in detail below.

### EXAMPLE INTERFACE

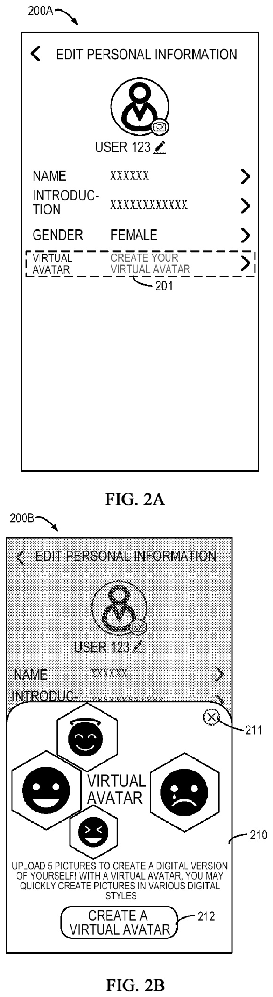

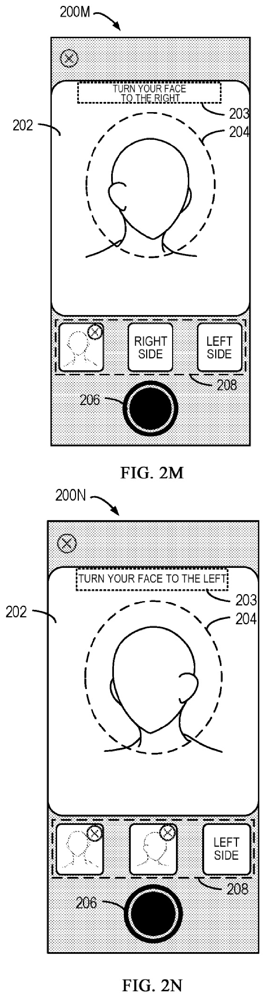

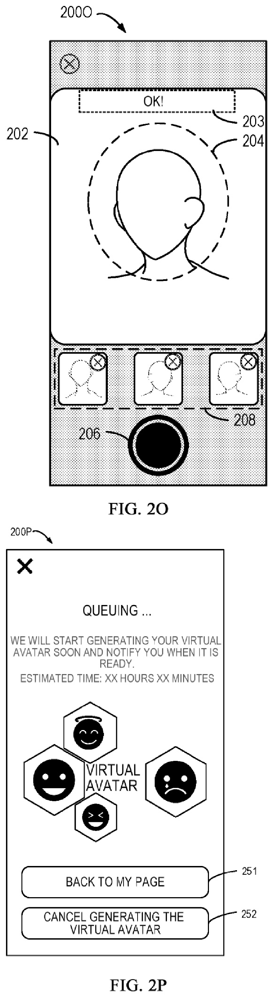

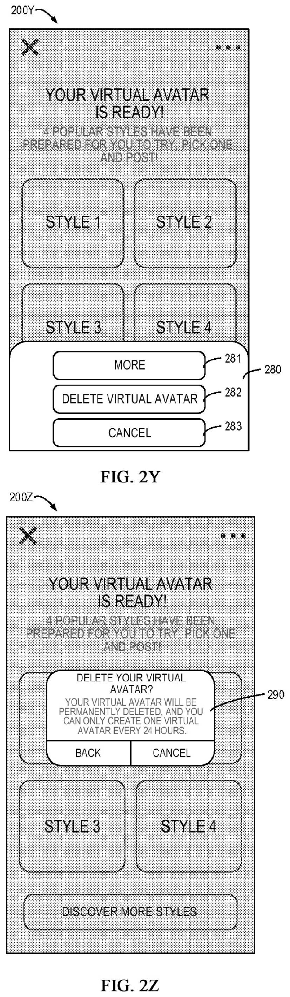

For ease of understanding, some example embodiments of the present disclosure will be described below in conjunction with the example interfaces of FIGS. 2A to 5J. FIGS. 2A to 5J illustrate schematic diagrams of example interfaces according to some embodiments of the present disclosure. It would be appreciated that the interfaces shown in the drawings are only examples, and various interface designs may actually exist. The interface elements in the interface may have different arrangements and different visual representations, one or more of the interface elements may be omitted or replaced, and there may also be one or more other interface elements. The embodiments of the present disclosure are not limited in this regard.

The example interfaces shown in FIGS. 2A to 5J may be presented at the terminal device 120. For the convenience of discussion, the example interfaces/example pages shown in FIGS. 2A to 5J will be described with reference to the environment 100 of FIG. 1. It should be noted that in this text, operations performed by the terminal device 120 may be specifically performed by a relevant application installed locally. In some embodiments, certain operations may need to be completed with the support of a server (for example, the server 130) or other devices. For ease of understanding, the following uses an example in which the terminal device 120 performs operations by itself for illustrative description.

In some embodiments, the terminal device 120 may obtain a virtual avatar corresponding to an object based on an image including an appearance of the object and input by the user 110. The virtual avatar may include media data representing an appearance feature of the object. The media data may include any suitable form of data, such as image data, video data, three-dimensional model data, etc. In some embodiments, the appearance feature may include a facial feature. In this way, virtual objects corresponding to different objects are distinguishable.

That is, the user 110 may create a virtual avatar associated with the user. The object here may include any appropriate object such as a person, an animal, a cartoon image, etc., and the present disclosure does not limit the specific object. In particular, in some embodiments, the object may be the user 110 himself/herself. It may be understood that the virtual avatar, the image, etc. here may be generated locally on the terminal device 120, or may be generated in the cloud by means of the server 130. For the convenience of description, the following uses an example in which the user 110 inputs an image including a human face for illustrative description.

In some embodiments, according to an operation of the user 110, the terminal device 120 may obtain an image of the created virtual avatar having a specific element, also referred to as an element-specific image. As used herein, the term "element" or "image element" may refer to any suitable aspect or attribute of an image. For example, the element may include an image style (also referred to as a style for short), an image background, an image foreground, etc.

In some embodiments, the element may be a style. The terminal device 120 may obtain an image of the created virtual avatar having a certain style, which is also referred to as a stylized image. That is, the stylized image may be generated and presented for the user 110. In the embodiments of the present disclosure, the style or the image style may include any type of style, for example, but not limited to, cartoon, watercolor, crayon, sketch, comic, etc.

Some example embodiments of the embodiments of the present disclosure will be described below mainly using the style as an example of the element. However, it would be appreciated that the embodiments described with reference to the style may be applied to other types of elements.

In some embodiments, both the creation of the virtual avatar and the generation of the element-specific image may be implemented by the terminal device 120 and/or the server 130 by means of a machine learning model. The machine learning model here may be any appropriate model, which is not limited by the present disclosure. Illustratively, in the case of generating an image, the terminal device 120 may generate a prompt based on configuration information of the style to be used, and provide the prompt to a model for generating the image (that is, a target model). The terminal device 120 may obtain an output of the target model and obtain an image based on the output.

### EXAMPLE INTERFACE FOR CREATING VIRTUAL AVATAR

The following describes example interactions for creating a virtual avatar. In some embodiments, the terminal device 120 may provide an entry associated with a virtual avatar in a user information interface of the user 110. In the case where the user 110 has not created a virtual avatar, the entry may be a creation entry of the virtual avatar. FIGS. 2A to 2C illustrate schematic diagrams of examples 200A to 200C of user information interfaces according to some embodiments of the present disclosure. As shown in FIG. 2A, the terminal device 120 may provide a user information interface shown in the example 200A. In the case where the user 110 (for example, "user 123" in the figure) has not created a virtual avatar, the terminal device 120 may provide a creation entry 201 for the virtual avatar in the example 200A. The terminal device 120 may display an example 200B shown in FIG. 2B in response to detecting a trigger operation for the creation entry 201. The trigger operation includes, but is not limited to, any appropriate operation such as a click operation, a double-click operation, a long-press operation, a slide operation, a drag operation, etc. The present disclosure does not limit the specific trigger operation.

In the example 200B, the terminal device 120 may display a prompt panel 210 for prompting to create a virtual avatar. The prompt panel 210 may display prompt information prompting how to create the virtual avatar (for example, the text "Upload 5 pictures to create a digital version of yourself! With a virtual avatar, you may quickly create various digital-style pictures"). The prompt panel 210 may also display, for example, an example effect of the virtual avatar or different image styles (for example, an example virtual avatar may be displayed). The prompt panel 210 may also include a creation control 212 and a cancel control 211. The terminal device 120 may determine to cancel the creation of the virtual avatar and return to displaying the example 200A in response to receiving a trigger operation for the cancel control 211. Alternatively or additionally, in some embodiments, the terminal device 120 may determine to cancel the creation of the virtual avatar and return to displaying the example 200A in response to receiving a trigger operation for an area outside the prompt panel 210 in the example 200B.

It should be noted that regarding the prompt logic of the prompt panel 210 for prompting to create the virtual avatar, in some embodiments, the terminal device 120 displays the prompt panel 210 by default every time after detecting the trigger operation for the creation entry 201. In some embodiments, the terminal device 120 may also display the prompt panel 210 only when the trigger operation for the creation entry 201 is detected for the first time or when the trigger operation for the creation entry 201 is detected for the first several times (which may be a predetermined number of times).

In the case where the trigger operation for the creation control 211 is detected, the terminal device 120 may determine that a creation request or indication for the virtual avatar is received, and display an image obtaining interface. The image obtaining interface may include an image capturing interface and/or an image selection interface. The terminal device 120 may capture an image in the image capturing interface by using a camera. The terminal device 120 may select an image stored locally on the terminal device 120 in the image selection interface. The image stored locally here includes an image previously captured by the terminal device 120 through the camera and an image obtained by the terminal device 120 from the cloud, from other devices, etc.

In some embodiments, if the creation request or indication of the virtual avatar is detected, the terminal device 120 may provide an option card including at least a first option corresponding to the image capturing interface and a second option corresponding to the image selection interface. The terminal device 120 may determine that an access permission for the image capturing interface is obtained and display the image capturing interface in response to detecting a selection operation for the first option. If a selection operation for the second option is detected, the terminal device 120 may determine that an access permission for the image selection interface is obtained and display the image selection interface. The selection operation here may include any appropriate operation such as a click operation, a double-click operation, a long-press operation, a slide operation, etc.

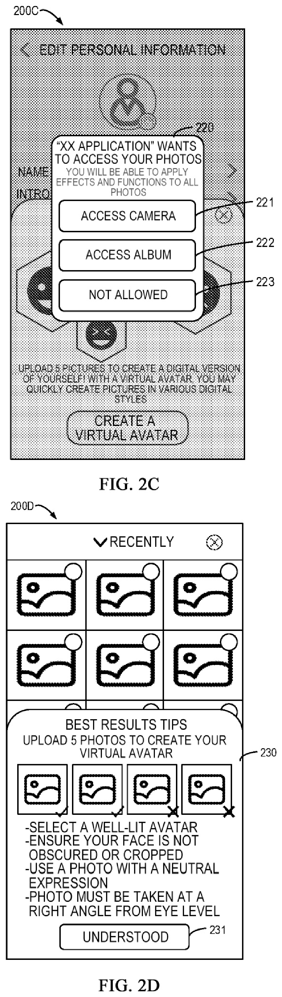

Illustratively, as shown in FIGS. 2B and 2C, the terminal device 120 may display an example 200C, for example, in response to detecting a trigger operation for the creation control 211. The example 200C includes an option card 220. The terminal device 220 may display an option 221 corresponding to the image capturing interface and an option 222 corresponding to the image selection interface in the option card 220. In response to detecting a selection operation for the option 221, the terminal device 120 may display the image capturing interface. In response to detecting a selection operation for the option 222, the terminal device 120 may display the image selection interface. The terminal device 220 may also display an option 223 in the option card 220, for example. For example, the terminal device 110 may determine to cancel displaying the image capturing interface or the image selection interface and return to displaying the example 200B in response to detecting a selection operation for the option 223.

In some embodiments, there may be a predetermined default interface. In response to detecting a creation request or indication for the virtual avatar, the terminal device 120 may display the predetermined default interface. In response to detecting a trigger operation for any appropriate interface element in the default interface, the terminal device 120 may display other interfaces. Illustratively, the default interface may be an image selection interface. If a trigger operation for any appropriate interface element (such as an interface switching control) in the image selection interface is detected, the terminal device 120 may switch to displaying the image capturing interface.

In some embodiments, if a selection operation for the option 222 in the example 200C is detected, the terminal device 110 may display the image selection interface. Alternatively or additionally, in some embodiments, the terminal device 120 may also display a default image selection interface in response to detecting the creation request or indication for the virtual avatar (for example, the trigger operation for the creation entry 201 in the example 200A, the trigger operation for the creation control 212 in the example 200B, etc.). The terminal device 120 may display a prompt panel for providing prompt information in the image selection interface.

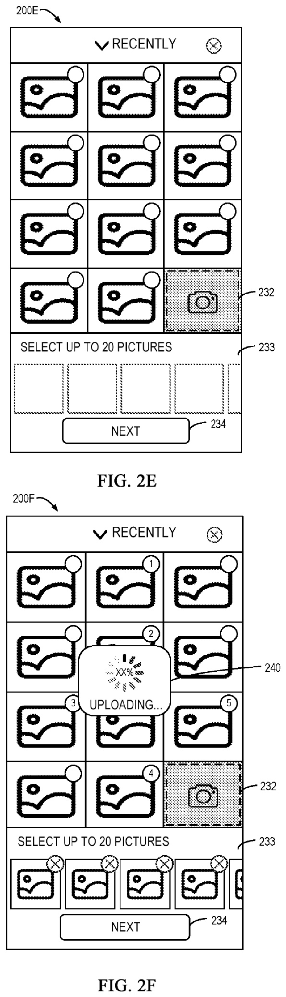

As shown in FIG. 2D, the terminal device 120 may display, for example, an example 200D including a prompt panel 230. The example 200D may be, for example, an image selection interface including a prompt panel. The prompt panel 230 may also display, for example, an example of an appropriate target image (for example, an image that satisfies a condition related to a facial area) and an example of an inappropriate target image (for example, an image that does not satisfy the condition related to the facial area). The prompt panel 230 also includes an operation control 231. If the trigger operation for the operation control 231 or any area outside the prompt panel 230 in the example 200D is detected, the terminal device 120 may cancel displaying the prompt panel 230. After canceling displaying the prompt panel 230, the terminal device 120 may display, for example, an example 200E as shown in FIG. 2E. The example 200E may be, for example, an image selection interface without a prompt panel. Multiple images with access permission may be displayed in the example 200E.

Similarly, in some embodiments, each time the terminal device 120 displays the image selection interface, the image selection interface including the prompt panel 230 is displayed by default. In some embodiments, the terminal device 120 may display the image selection interface including the prompt panel 230 only when the image selection interface is displayed for the first time or when the image selection interface is displayed for the first several times (which may be a predetermined number of times), and when the image selection interface is displayed again, the image selection interface without the prompt panel 230 is displayed.

As shown in FIG. 2E, the example 200E may also include an area 233 for displaying a selected image. In the case where the user has not selected an image, the terminal device 120 may not display any image in the area 233. If a selection operation for any image displayed in the image selection interface (for example, a selection operation for a captured image) is received, the terminal device 120 may determine that the image is selected. In this case, the terminal device 120 may display the selected image in the area 233.

In some embodiments, the terminal device 120 may determine whether the selected image satisfies a condition related to a facial area (for example, whether the selected image is an image including a face of an object). The terminal device 120 may determine whether the selected image satisfies the condition related to the facial area, for example, through a series of face detection models. For example, the terminal device 120 may display the selected image in the area 233 when it is determined that the selected image satisfies the condition related to the facial area. For example, the terminal device 120 may display prompt information prompting that the image does not satisfy the condition related to the facial area and the image may not be selected when it is determined that the selected image does not satisfy the condition related to the facial area.

In some embodiments, in order to ensure the effect of the created virtual avatar, the terminal device 120 may need to obtain a plurality of images. The number of the plurality of images may be any appropriate number that satisfies a virtual avatar creation requirement. The number of images and/or a range of the number of images that satisfy the virtual avatar creation requirement may be predetermined. For example, if the number of images that satisfy the virtual avatar creation requirement is predetermined by the user to be 5, the user needs to select 5 images so that the terminal device 120 may obtain these 5 images. For another example, if the range of the number of images that satisfy the virtual avatar creation requirement is predetermined by the user to be from 5 to 20, the user needs to select any number of images (for example, 10) from 5 to 20 so that the terminal device 120 may obtain these 5 images.

The area 233 may also include an operation control 234. The terminal device 120 may obtain a selected set of images in response to detecting a trigger operation for the operation control 234. For example, the terminal device 120 may display an example 200F of the interface shown in FIG. 2F during the process of obtaining the selected set of images. The terminal device 120 may display an interface element 240 indicating that the terminal device 120 is obtaining the selected set of images in the example 200F.

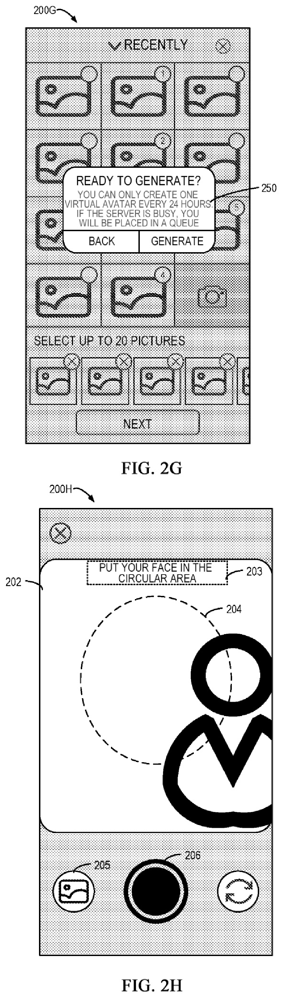

In some embodiments, the terminal device 120 may display a virtual avatar generation interface in response to obtaining the selected set of images. In some embodiments, in order to perform secondary determination on the selected set of images and whether to generate the virtual avatar, the terminal device 120 may also display an example 200G shown in FIG. 2G in response to obtaining the selected set of images. The terminal device 120 may display a card 250 in the example 200G for prompting to confirm whether to generate the virtual avatar. The card 250 includes a return control and a generation control. The terminal device 120 may cancel displaying the card 250 in response to detecting a trigger operation for the return control in the card 250. The terminal device 120 may start to generate the virtual avatar in response to detecting a trigger operation for the generation control in the card 250.

Returning to FIG. 2E, the image selection interface shown in the example 200E may also include an operation control 232. The terminal device 120 may switch to displaying the image capturing interface in response to detecting a trigger operation for the operation control 232. In some embodiments, the terminal device 120 may also determine, in response to detecting a selection operation for the selection 221 in the example 200C, that a permission to access the camera is obtained and display the image capturing interface. In some embodiments, the terminal device 120 may also display a default image capturing interface in response to detecting a creation request or indication for the virtual avatar (for example, a trigger operation for the creation entry 201 in the example 200A, a trigger operation for the creation control 212 in the example 200B, etc.).

The terminal device 120 may display, for example, an example 200H shown in FIG. 2H. The example 200H may be, for example, an example of the image capturing interface. The terminal device 120 may display an image captured by a camera in an area 202 of the example 200H. In some embodiments, the terminal device 120 may also display a border 204 and an area 203 for displaying prompt information in the area 202. The terminal device 120 may determine, for example, whether the captured image satisfies a condition related to a facial area. The condition related to the facial area may include, for example, at least a condition that a facial area of a target object is located within the border 204 in the captured image. As mentioned above, the terminal device 120 may determine whether the captured image satisfies the condition related to the facial area by using a series of face detection models.

In some embodiments, if it is determined that the image captured in the example 200H does not satisfy the condition related to the facial area, the terminal device 120 may display corresponding prompt information in the area 203. The prompt information here may be fixed prompt information that is set in advance. For example, it may be prompt information such as "Please adjust the face position". The prompt information may also be determined based on one or more conditions that are not satisfied in at least one condition. Illustratively, if it is determined that the captured image does not satisfy the condition that the facial area of the target object is located within the border 204 in the captured image, the terminal device 120 may display, for example, "Put your face in the predetermined area" in the area 203. As shown in FIG. 2H, in response to the facial area being located in the area outside the border 204 (including two possibilities of being completely outside the border 204 or partially outside the border 204), the terminal device 120 may display the prompt information "Put your face in the predetermined area" in the area 203. The area 203 may be located at any appropriate position in the example 200H, for example, it may be displayed on the top layer of all layers. For example, the area 203 may be superimposed and displayed above the area 202, etc.

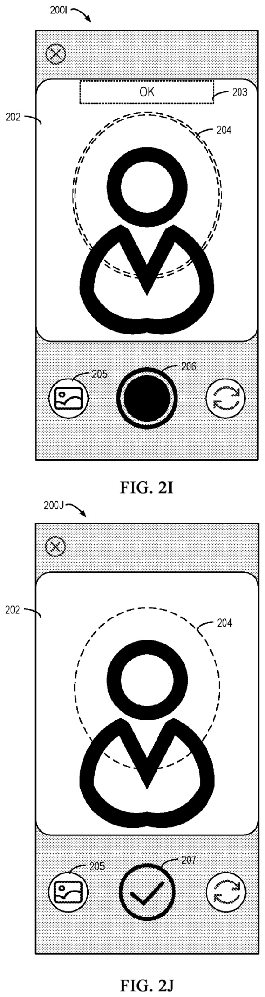

In some embodiments, if it is determined that the captured image satisfies the condition related to the facial area, the terminal device 120 may display prompt information that the image may be captured in the area 203. As shown in FIG. 2I, if it is determined that the captured image satisfies the condition related to the facial area, the terminal device 120 may display the prompt information "OK" in the area 203 of the example 200I to prompt the user that the current image satisfies the condition related to the facial area and may be captured. The terminal device 120 may determine, in response to detecting a trigger operation for a capturing control 206, that an image capturing operation is received and capture the image currently displayed in the area 202.

After obtaining the captured image, the terminal device 120 may display an example 200J shown in FIG. 2J. The example 200J may display, for example, the captured image and a mark 207. The mark 207 is used to indicate that the image currently captured satisfies the condition related to the facial area and the image is successfully obtained by the terminal device 120.

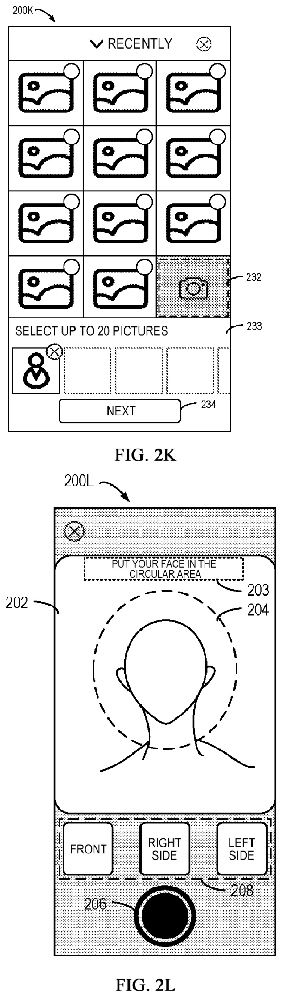

As shown in FIGS. 2H to 2J, the image capturing interfaces shown in the example 200H, the example 200I, and the example 200J may also display an operation control 205. The terminal device 120 may switch to displaying the image selection interface in response to receiving a trigger operation for the operation control 205. The terminal device 120 may display, for example, an example 200K shown in FIG. 2K, which illustrates an example of the image selection interface. The terminal device 120 may display an image captured through the image capturing interface in an area 233 of the example 200K.

It should be noted that the terminal device 120 may obtain the virtual avatar only based on a plurality of images captured via the image capturing interface, may obtain the virtual avatar only based on a plurality of images selected via the image selection interface, or may obtain the virtual avatar based on a combination of at least one image captured via the image capturing interface and at least one image selected via the image selection interface. Which images are specifically used to obtain the virtual avatar may depend on an operation of the user 110. Therefore, the user 110 may flexibly select the captured image or capture a new image.

In some embodiments, if the terminal device 120 obtains the virtual avatar only based on a plurality of images selected via the image selection interface, the terminal device 120 may determine the plurality of selected images in response to receiving a trigger operation for the operation control 234 shown in the example 200E to the example 200G, and obtain the virtual avatar based on the plurality of images.

In some embodiments, if the terminal device 120 obtains the virtual avatar based on a combination of at least one image captured via the image capturing interface and at least one image selected via the image selection interface, the terminal device 120 may obtain a plurality of selected images in response to receiving a selection operation for the plurality of images in the example 200K. The terminal device 120 may obtain the virtual avatar based on the image captured through the image capturing interface and the plurality of selected images that are displayed in the area 233.

In some embodiments, if the terminal device 120 obtains the virtual avatar only based on a plurality of images captured via the image capturing interface, the terminal device 120 may display examples 200L to 200O shown in FIGS. 2L to 2O. The examples 200L to 200O illustrate multiple examples of the image capturing interface. It would be appreciated that in order to ensure the effect of the virtual avatar generated only based on the plurality of images captured via the image capturing interface subsequently, the terminal device 120 may need to obtain images including faces at different angles. The examples 200L to 200O may display an area 208. The area 208 may display a prompt indicating to obtain a plurality of images including faces at different angles (it would be appreciated that although three images are shown in the figure, the plurality of images here may be in any number). The terminal device 120 may also display, in the area 203, prompt information indicating to obtain faces at different angles. For example, if an image including a right side of a face is obtained, the terminal device 120 may display prompt information "Turn your face to the right" in the area 203. The terminal device 120 may also display the obtained image at a corresponding position in the area 208. The terminal device 120 may then obtain the virtual avatar based on the plurality of images displayed in the area 208.

If a trigger operation for the operation control 234 is received, the terminal device 120 may determine that an operation indicating to create a virtual avatar is received, and start to obtain the virtual avatar. The terminal device 120 may create the virtual avatar by means of a machine learning model, and the machine learning model may be deployed locally on the terminal device 120 or on the server 130. For example, a plurality of images specified by the user 110 may be provided to the machine learning model for it to generate the virtual avatar.

As described above, in some embodiments of the present disclosure, the user 110 may not be required to distinguish these selected images, for example, the user may not need to specify which of these images are front images of the object. This facilitates the user to specify images more conveniently.

It should be noted that in the case where the plurality of obtained images all include a face of the same object (for example, a first object) and only include the face of the object, the terminal device 120 may generate a virtual avatar (for example, a first virtual avatar) corresponding to the object based on the plurality of obtained images. In the case where the plurality of obtained images include faces of a plurality of objects, the terminal device 120 may determine priorities corresponding to the plurality of objects, respectively. The terminal device 120 may determine the priority corresponding to each object based on, for example, the number of faces of each object. For example, if 10 images are obtained in total, and 6 images of the 10 images include a face of a first object, 5 images include a face of a second object, and 3 images include a face of a third image (it would be appreciated that the same image may include faces of a plurality of objects, and the first object, the second object, and the third object are three different objects), the terminal device 120 may determine that the priority of the first object > the priority of the second object > the priority of the third object. The terminal device 120 may then generate a virtual avatar corresponding to the first object.

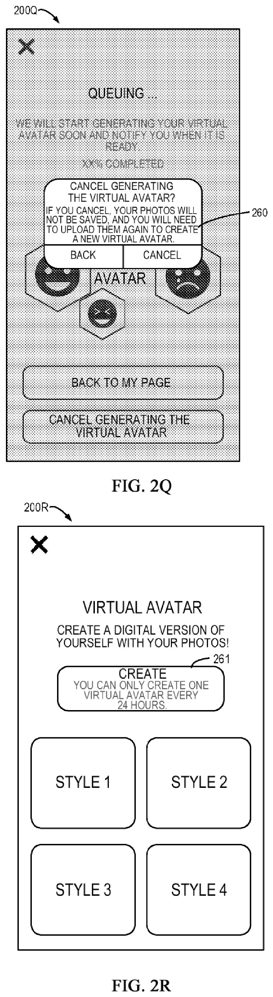

During the process of generating the virtual avatar, the terminal device 120 may display an example 200P shown in FIG. 2P. The example 200P illustrates an example of a creation progress interface of the virtual avatar. The example 200P includes prompt information indicating a creation progress of the virtual avatar. For example, the example 200P includes prompt information "Estimated time: XX hours XX minutes". The example 200P may also include an operation control 251 and an operation control 252. If a trigger operation for the operation control 252 is received, the terminal device 120 may determine to cancel generation of the virtual avatar. For example, the terminal device 120 may switch back to displaying the example 200A shown in FIG. 2A. In order to avoid accidental touch, the terminal device 120 may also display, for example, a card prompting to confirm whether to cancel generation of the virtual avatar. As shown in FIG. 2Q, in an example 200Q, the terminal device 120 may display a card 260. The terminal device 120 may determine to continue generating the virtual avatar in the case where a return control in the card 260 is detected. The terminal device 120 may cancel generation of the virtual avatar in the case where a cancel control in the card 160 is detected. For example, the terminal device 120 may switch back to displaying the example 200A shown in FIG. 2A, or switch to displaying an example 200R shown in FIG. 2R. The example 200R includes an operation control 261. For example, the terminal device 120 may repeat the above operations of obtaining images and generating the virtual avatar in response to detecting a trigger operation for the operation control 261.

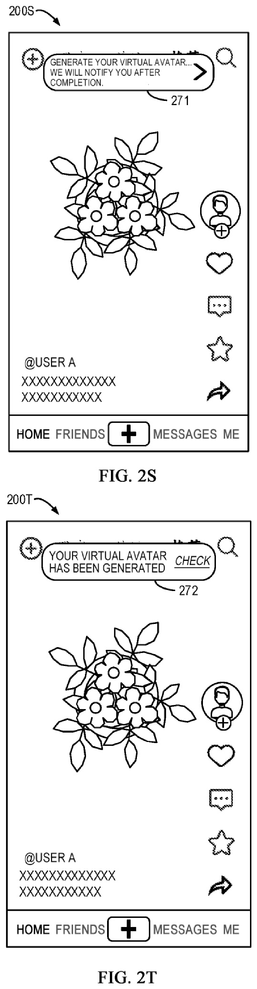

Returning to FIG. 2P, in the case where a trigger operation for the operation control 251 is detected, the terminal device 120 may switch to displaying other interfaces that may be provided by the application 120. For example, in response to detecting the trigger operation for the operation control 251, the terminal device 120 may switch to displaying a content recommendation interface (for example, FIG. 200S) shown in FIG. 2S. It would be appreciated that the terminal device 120 may also display any appropriate interface in response to detecting the trigger operation for the operation control 251, which is not limited in the present disclosure.

The example 200S may include, for example, an entry 271. The terminal device 120 may display, at the entry 271, prompt information (for example, the text "Generating your virtual avatar ...") indicating that the virtual avatar is currently generated. In some embodiments, the terminal device 120 may also display creation progress information of the virtual avatar (for example, the first virtual avatar) at the entry 271. For example, the terminal device 120 may display the text "Created: XX%" at the entry 271 to display the creation progress information of the first virtual avatar. If a trigger operation for the entry 271 is detected, the terminal device 120 may switch back to displaying the example 200P.

After the creation of the virtual avatar is completed, the terminal device 120 may also provide a push notification to indicate that the creation of the virtual avatar is completed. The push notification may include a first viewing entry for viewing the created virtual avatar. In some embodiments, the terminal device 120 may also provide the first viewing entry in different styles. For example, if the user interface currently displayed by the terminal device 120 is an interface provided by the application 120, the terminal device 120 may provide the first viewing entry in a first style, and if the user interface currently displayed by the terminal device 120 is not an interface that may be provided by the application 120, the terminal device 120 may provide the first viewing entry in a second style.

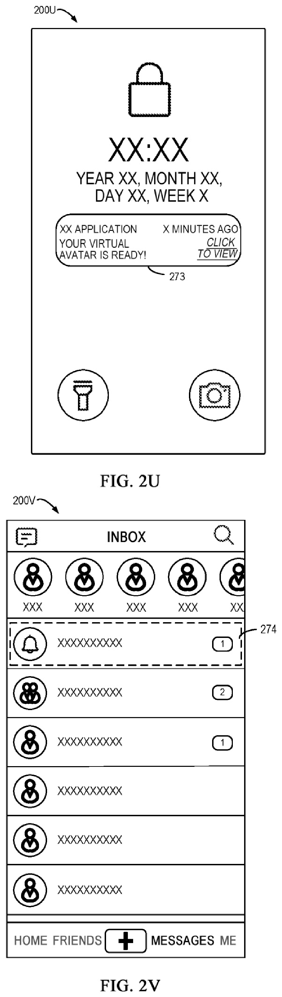

As shown in FIGS. 2T and 2U, the example 200T may be, for example, a content recommendation interface provided by the application 120, and the example 200U may be, for example, an interface that is not provided by the application 120 (that is, an interface other than the interface that may be provided by the application 120). The terminal device 120 may provide a first viewing entry 272 in the example 200T and a first viewing entry 273 in the example 800B. The terminal device 120 may then display the created virtual avatar in the case where a trigger operation for the first viewing entry 272 or the first viewing entry 273 is detected.

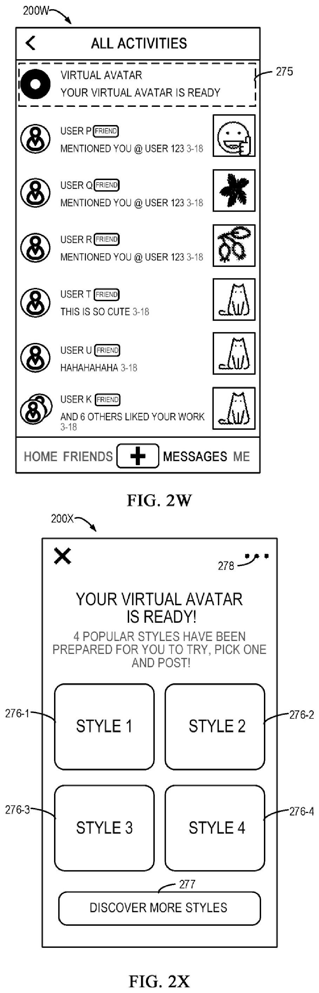

In some embodiments, the terminal device 120 may also provide a second viewing entry for the virtual avatar in the user interface to view the created virtual avatar after the creation of the virtual avatar is completed. The user interface including the second viewing entry may be, for example, a message interface of the user. As shown in FIGS. 2V and 2W, the example 200V and the example 200W may be, for example, message interfaces of the user. The terminal device 120 may display a notification message viewing entry 274 in the message interface shown in the example 200V, for example, in response to the virtual avatar being generated. In some embodiments, the notification message viewing entry 274 may also be fixedly displayed in the example 200V, and the terminal device 120 displays a message prompt (for example, displays the number 1) at the notification message viewing entry 274 in response to the virtual avatar being generated. The terminal device 120 displays the message interface shown in the example 200W in response to detecting a trigger operation for the notification message viewing entry 274. The example 200W includes a second viewing entry 275. In response to detecting a trigger operation for the second viewing entry 275, the terminal device 120 displays the created virtual avatar.

In some embodiments, the terminal device 120 may also display avatar information interfaces (that is, the examples 200X to 200Z) of the virtual avatar shown in FIGS. 2X to 2Z. The terminal device 120 may display the avatar information interface, for example, in response to the virtual avatar being generated or in response to a trigger for avatar information of the virtual avatar. The avatar information interface may include at least one of a viewing entry corresponding to at least one style (for example, an entry 276-1, an entry 276-2, an entry 276-3, an entry 276-4, etc., and the present disclosure does not limit the number of at least one style) and a start interface entry (for example, an entry 277) for stylized image generation. If the terminal device 120 detects a trigger operation for the viewing entry (for example, the entry 276-1) corresponding to a certain style, the terminal device 120 may display style information interface (as will be described below) of the style. If the terminal device 120 detects a trigger operation for the start interface entry (for example, the entry 277), the terminal device 120 may switch to displaying the start interface for stylized image generation, as will be described below.

The terminal device 120 may also display an entry 278 in the example 200X to provide more operations for the virtual avatar. The terminal device 120 may display an example 200Y of an interface shown in FIG. 2Y, for example, in response to detecting a trigger operation for the entry 278. The example 200Y includes a panel 280. The panel 280 may include, for example, a control 281, a control 282, and a control 283. The terminal device 120 may display a user interface including more operation controls for the virtual avatar in response to receiving a selection operation for the control 281. The terminal device 120 may cancel displaying the panel 280 in response to receiving a selection operation for the control 283. For example, the terminal device 120 may switch to displaying the interface shown in the example 200X. The terminal device 120 may determine that a deletion operation for the virtual avatar is received in response to receiving a selection operation for the control 282. In order to avoid accidental touch, the terminal device 120 may switch to displaying the interface shown in the example 200Z. A card 290 is displayed in the example 200Z. The card 290 includes prompt information prompting to confirm whether to delete the virtual avatar. The terminal device 120 may determine to delete the virtual avatar in response to receiving a trigger operation for a deletion control in the card 290. The terminal device 120 may determine to cancel deleting the virtual avatar in response to receiving a trigger operation for a return control in the card 290. For example, the terminal device 120 may return to displaying the example 200X or the example 200Y.

After the virtual avatar is created, the virtual avatar associated with the user may be used to generate an image having a certain element, which is also referred to as an element-specific image. For example, the virtual avatar associated with the user may be used to generate an image having a certain style, which is also referred to as a stylized image. In some embodiments, an image having the element of the virtual avatar may be generated according to a style selected from a plurality of predetermined elements according to user selection. In some embodiments, an image having a customized element of the virtual avatar may be generated based on customization information of the user. In some embodiments, the user may also be supported to adjust the predetermined element or the customized element. The predetermined element or the customized element may be regarded as a parent element, and an element obtained by adjusting the parent style may be regarded as a child element of the parent element.

### EXAMPLE INTERFACE FOR REUSING ELEMENT

In some embodiments, if a user posts an image (which may be in a picture form or a video form) having a certain element, other users may be supported to use this element to generate an image of a virtual avatar associated with the other users themselves. An example embodiment will be described below. For the purpose of description only, it is assumed that a first user is associated with a first virtual avatar of a first object, for example, the first object may be the first user; a second user different from the first user is associated with a second virtual avatar of a second object, for example, the second object may be the second user. The first user posts a fourth image of the first virtual avatar having a third element.

The example embodiment of reusing the element is described below using the style as an example, but it would be appreciated that the embodiment described with reference to the style is applicable to other elements. In some embodiments, if a user posts an image (which may be in a picture form or a video form) having a certain style, other users may be supported to use this style to generate images of virtual avatars associated with the other users themselves. An example embodiment will be described below. For the purpose of description only, it is assumed that a first user is associated with a first virtual avatar of a first object, for example, the first object may be the first user; a second user different from the first user is associated with a second virtual avatar of a second object, for example, the second object may be the second user. The first user posts a first image of the first virtual avatar having a first style.

The terminal device 120 of the second user may present the first image of the first virtual avatar having the first style and a style use entry of the first style. In some embodiments, the first image and the style use entry may be presented in a content recommendation interface. For example, when the second user browses the information stream or browses the posted content of a followed user, the first image and the style use entry may be presented to the second user. Then, based on a trigger on the style use entry, the terminal device 120 may present a second image of the second virtual avatar having the first style. That is, if a user views an image of a style that he/she likes, the user may use this style to generate a new image.

In some embodiments, the first style may include a parent style and a child style obtained by partially adjusting the parent style. For example, the parent style may be a predetermined style in the application 125. In another example, the parent style may be a user-customized style, as described above. The child style may be generated through the style adjustment process described above.

In some embodiments, if the style use entry is triggered, the terminal device 120 may present a style information interface of the first style, for example, a style detail page. The style information interface may include a first image generation entry for the first style or a viewing entry for each of at least one image having the first style. Based on the operation associated with the style information interface, the terminal device 110 may obtain the second image of the second virtual avatar having the first style. That is, based on the operation associated with the style information interface, the second user may trigger, by using the virtual avatar associated with the second user, creation of an image having the same or similar style.

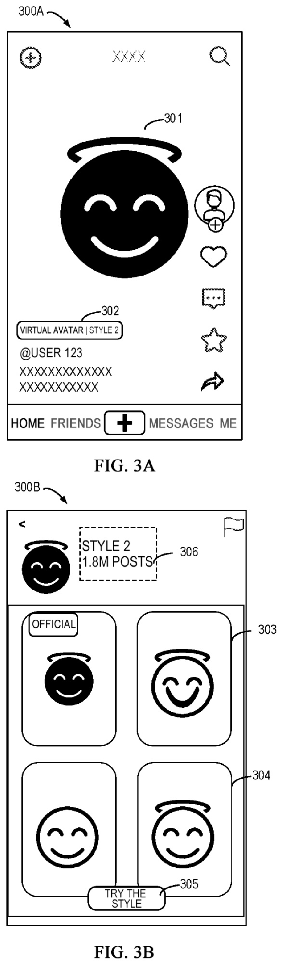

Some example interfaces are described with reference to FIGS. 3A to 3I. FIG. 3A illustrates an example 300A of a content recommendation interface. The interface includes an image 301 of the first virtual avatar having a style 2 (which is an example of the first style) and a style use entry 302 for the style 2. If the style use entry 302 is triggered, the terminal device 120 may present an example 300B in FIG. 3B, which is an example of a style information interface. The example 300B illustrates the style information interface of the style 2. The style information interface includes basic information of the style, for example, a name displayed in the area 306, the number of posted works, etc.

The style information interface may include a first image generation entry for the first style, for example, a first image generation entry 305. In some embodiments, if the first image generation entry 305 is triggered, the terminal device 120 may obtain the second image. That is, the terminal device 120 may generate an image having the first style by using the second virtual avatar.

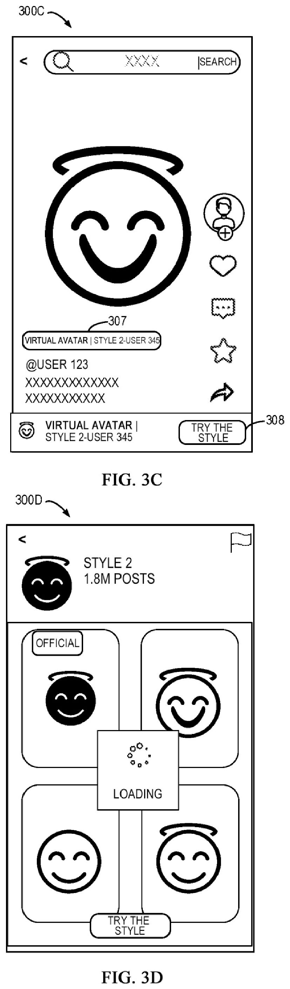

The style information interface may include a viewing entry for each of at least one image having the first style, for example, a viewing entry 303 and a viewing entry 304 shown in FIG. 3B. If a certain viewing entry is triggered, a viewing interface of a corresponding image may be presented, and the viewing interface may include a further image generation entry for the first style, which is also referred to as a second image generation entry. For example, if the viewing entry 303 is triggered, the terminal device 110 may present an image viewing interface shown in the example 300C in FIG. 3C. The image viewing interface includes a corresponding image, a style use entry 307, and a second image generation entry 308. If the second image generation entry 308 is triggered, the terminal device 120 may obtain the second image.

It should be noted here that in some embodiments, if the first style is a parent style, the image corresponding to the viewing entry included in the style information interface may be an image having the parent style and/or an image having a child style under the parent style. For example, the style 2 is the parent style. The image in the style information interface shown in the example 300B may have the style 2 or a child style of the style 2. For example, the image corresponding to the viewing entry 303 has a child style "style 2 - user 345". The suffix "- user 345" in the style name may represent that the "user 345" adjusts the style 2 to obtain the child style. In this case, the style name displayed in the style use entry 307 is a name of the child style, as shown in FIG. 3C.

In some embodiments, if the first style is a child style, the image corresponding to the viewing entry included in the style information interface may be an image having the child style and/or an image having a parent style of the child style. In addition, a name of the child style is displayed in the area 306.

The generation of the stylized image continues to be described. If the first image generation entry 305 or the second image generation entry 308 is triggered, the terminal device 120 may trigger the generation of the second image. If the current second user does not have an associated virtual avatar, that is, if the second virtual avatar has not been created, the terminal device 120 may present an entry for creating a virtual avatar or an introduction interface about the virtual avatar. For example, the terminal device 120 may present the interface shown in FIG. 2A or FIG. 2B to guide the second user to create the second virtual avatar associated with the second user. In this case, if it takes a long time to create the second virtual avatar, the second image of the second virtual avatar having the first style may be automatically generated after the creation of the second virtual avatar is completed, without the need for the second user to re-operate. After the second image is generated, a notification or a prompt may be sent to the second user in various suitable manners, so that the second user may view the second image. Such notification or prompt may include, but is not limited to, a notification in the content recommendation interface, a message in the inbox, a system message in the terminal device 120, etc.

In some embodiments, if the current second user has a created virtual avatar, the terminal device 110 may allow the second user to choose whether to use the created virtual avatar, or to re-create a virtual avatar and use the newly created virtual avatar. In some embodiments, if the current second user has a plurality of created virtual avatars, the terminal device 110 may allow the second user to select a virtual avatar to be used from these created virtual avatars.

In some embodiments, if the current second user has the created second virtual avatar, the terminal device 110 may directly trigger the generation of the second image using the second virtual avatar. For example, if the first image generation entry 305 is triggered, the terminal device 120 may present the interface shown in the example 300D in FIG. 3D, which indicates the trigger of the second image generation.

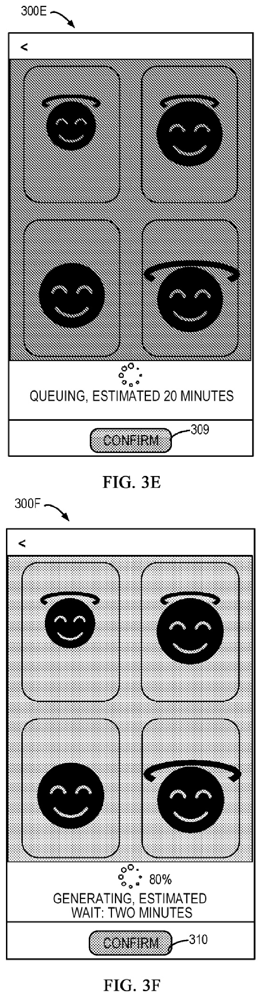

In some embodiments, during the process of generating the second image, the terminal device 120 may present a generation progress interface for indicating the image generation progress according to the generation progress of the second image, as shown in an example 300E in FIG. 3E and an example 300F in FIG. 3F. The generation progress interface may also include a determination control, for example, a control 309 in the example 300E and a control 310 in the example 300F. If a trigger operation for the determination control in the generation progress interface is received, the terminal device 120 may switch to displaying other interfaces that may be provided by the application 120. For example, the terminal device 120 may switch to displaying a content recommendation interface of the application 120 in response to detecting a trigger operation for the control 309 or 310.

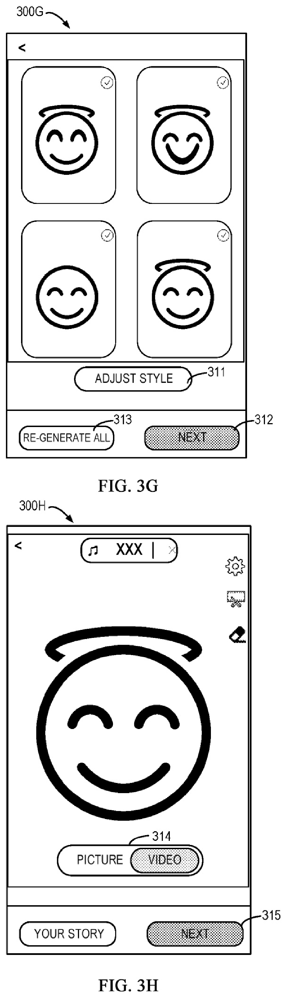

After the second image is generated or in response to a viewing operation of the second user, the terminal device 120 may present a content preview interface for the second image. For example, an example 300G in FIG. 3G is an example of the content preview interface. The content browsing interface may include a plurality of second images. Through the content browsing interface, the second user may further edit these images or may delete one or more of the images.

In some embodiments, based on the operation of the second user, the terminal device 120 may post the second image. The content preview interface shown in the example 300G also includes an operation control 313 and an operation control 312. For example, the terminal device 120 may trigger re-generating the second image in response to receiving a trigger operation for the operation control 313. For example, the terminal device 120 may switch to presenting an example 300H shown in FIG. 3H in response to receiving a trigger operation for the operation control 312. The example 300H illustrates an example of a content editing interface of the second image.

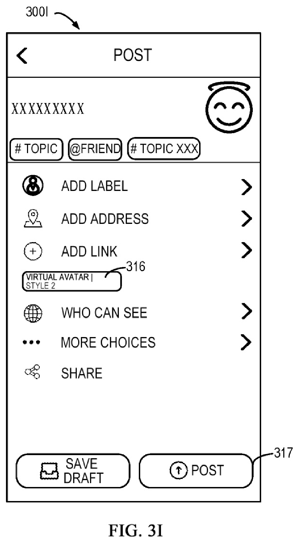

The content editing interface shown in the example 300H includes an option for a posting format of the second image. For example, the example 300H may include an operation control 314. The operation control 314 includes an option "picture" and an option "video". The terminal device 120 may determine to post the second image in a picture format in response to receiving a trigger operation for the option "picture". The terminal device 120 may determine to post the second image in a video format in response to receiving a trigger operation for the option "video". The content editing interface shown in the example 300H may also include an operation control 315. The terminal device 120 may determine that an editing confirmation is received (that is, the editing of the second image is completed) in response to receiving a trigger operation for the operation control 315, and switch to presenting the content posting interface for the second image. FIG. 3I illustrates an example (that is, an example 300I) of the content posting interface for the second image. The example 300I includes a posting control 317, and the terminal device 120 may determine that a posting confirmation is received and post the second image in response to receiving a trigger operation for the posting control 317. In some embodiments, the content posting interface shown in the example 300I may also include a style use entry 316 for the first style (which is the style 2 in this example). It should be understood that if a child style is used, the style use entry 316 presents a name of the child style, for example, "style 2 - user 345".

In some embodiments, the second user may be supported to adjust the style, and an image of the second virtual avatar having the first adjusted style may be generated. For example, the terminal device 120 may present a style adjustment interface in response to a style adjustment instruction for the second image of the second virtual avatar having the first style. The terminal device 120 may receive adjustment information for the first style via the style adjustment interface, and present a fourth image of the second virtual avatar having the adjusted first style based on the received adjustment information. That is, if the second user is not satisfied with the generated second image or has his/her own preference, the second user may adjust the first style, and generate an image of the second virtual avatar having the adjusted first style based on the adjusted first style.

In some embodiments, the content preview interface described above may include a style adjustment entry. For example, the content preview interface shown in the example 300G may include an entry 311. The terminal device 120 may determine that the style adjustment instruction for the second image of the second virtual avatar having the first style is received in response to detecting a trigger operation for the style adjustment entry. The terminal device 120 may present the style adjustment interface in response to the style adjustment instruction for the second image.

It should be noted that if the second user adjusts the first style, that is, generates a new child style, the style name displayed in the style use entry displayed after the image is posted may include relevant information of the second user. For example, the second user is "user 567" and adjusts the style 2. Correspondingly, the style name displayed in the style use entry may be "style 2 - user 567".

In such an embodiment, the existing element may be used through content posted by other users. This helps to enhance the interactivity between different users.

### EXAMPLE INTERFACE FOR ADJUSTING IMAGE ELEMENT

As mentioned above, in some embodiments, the user may be supported to adjust the image element, and an image of the virtual avatar having the adjusted element may be generated. The terminal device 120 may present an element adjustment interface in response to an element adjustment request for the second image of the second virtual avatar having the first element. The terminal device 120 may receive adjustment information for the first element via the element adjustment interface, and present a fourth image of the second virtual avatar having the adjusted first element based on the received adjustment information. That is, if the user is not satisfied with the generated second image having the first element or has his/her own preference, the user may adjust the first element, and generate an image of the second virtual avatar having the adjusted first element based on the adjusted first element. In some embodiments, if the first element is a predetermined element, the first element may be regarded as a parent element, and the adjusted first element may be regarded as a child element of the parent element.

The example embodiment of adjusting the image element is described below using the style as an example, but it would be appreciated that the embodiment described with reference to the style is applicable to other elements. In some embodiments, the user may be supported to adjust the style, and an image of the virtual avatar having the adjusted style may be generated. For example, the terminal device 120 may present a style adjustment interface in response to a style adjustment instruction for the second image of the second virtual avatar having the first style. The terminal device 120 may receive adjustment information for the first style via the style adjustment interface, and present a fourth image of the second virtual avatar having the adjusted first style based on the received adjustment information. That is, if the user is not satisfied with the generated second image having the first style or has his/her own preference, the user may adjust the first style, and generate an image of the second virtual avatar having the adjusted first style based on the adjusted first style. In some embodiments, if the first style is a predetermined style, the first style may be regarded as a parent style, and the adjusted first style may be regarded as a child style of the parent style.

In some embodiments, the content preview interface (for example, the example 300G shown in FIG. 3G) described above may include a style adjustment entry (for example, the entry 311). The terminal device 120 may determine that a style adjustment instruction for the second image of the second virtual avatar having the first style is received in response to detecting a trigger operation for the style adjustment entry. The terminal device 120 may present the style adjustment interface in response to the style adjustment instruction for the second image. The style adjustment interface may include, for example, at least one of a first input control (for example, a text input box, a voice input control, etc.) for receiving the adjustment information, first prompt information for the adjustment information, or the second image. The first prompt information indicates an adjustable part of the first style.

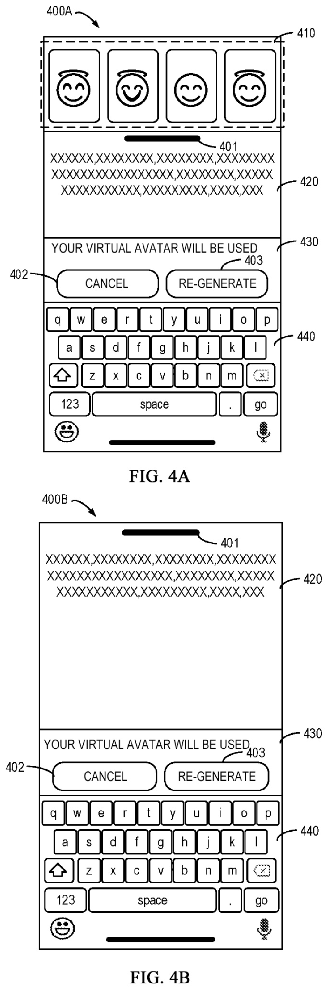

FIG. 4A illustrates an example (that is, an example 400A) of the style adjustment interface. As shown in FIG. 4A, the example 400A may include a second image 410. The terminal device 120 may present the second image 410 to enable the user to adjust the configuration information of the first style in reference to the second image 410. Thus, it is convenient for the user to adjust the style intuitively. The example 400A may also include a first input control 420, an area 430, and an input panel 440. The user may input the adjustment information for the first style through the first input control 420. Alternatively, at least a part of the current configuration information of the first style may be presented in the first input control 420. The user may modify the configuration information displayed in the first input control 420.

In some embodiments, if a predetermined operation for the style adjustment interface is received, the terminal device 120 may cease displaying the second image in the style adjustment interface. In other words, the terminal device 120 may not display the second image in the style adjustment interface. In addition, the terminal device 120 may also enlarge a presentation area of the first input control. As shown in FIG. 4A and FIG. 4B, for example, the terminal device 120 may present the interface shown in the example 400B in response to receiving an upward drag operation for the operation control 401 in the example 400A. The second image 410 is no longer presented in the example 400B, and a presentation area of the first input control 420 in the example 400B is larger than a presentation area of the first input control 420 in the example 400A.

The area 430 may include a cancel control 402 and a re-generation control 403. The terminal device 120 may obtain the adjustment information input by the user via the input panel 440. If a trigger operation for the cancel control 402 is received, the terminal device 120 may determine to cancel adjusting the configuration information of the first style. For example, the terminal device 120 may return to presenting the content preview interface. The terminal device 120 may also, in response to detecting a trigger operation for the re-generation control 403, determine an adjusted first style based on the adjusted configuration information of the first style and obtain a fourth image of the second virtual avatar having the adjusted first style. In some embodiments, the terminal device 120 may use a target model to generate the fourth image. For example, a prompt may be generated based on the adjusted configuration information of the first style, and the prompt may be provided to the target model. In another example, the adjusted configuration information of the first style and the second virtual avatar may be provided to the target model as image generation conditions. The embodiments of the present disclosure are not limited in this regard.

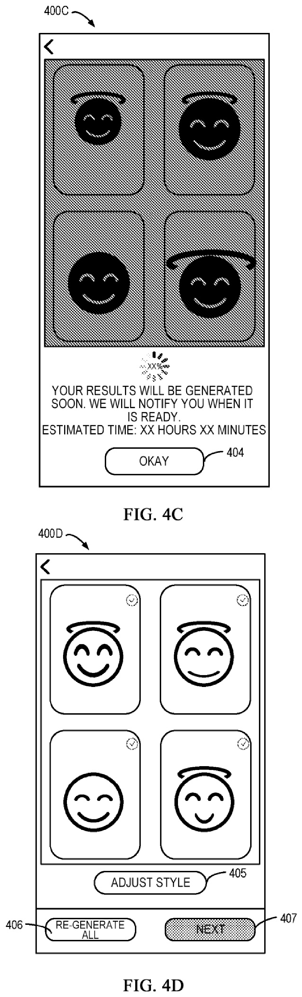

For example, the terminal device 120 may start to obtain the fourth image in response to receiving a trigger operation for the re-generation control 403. For example, the terminal device 120 may present an example 400C shown in FIG. 4C. The example 400C is an example of a creation progress interface of the fourth image. Before the fourth image is obtained, the terminal device 120 may, for example, present indication information regarding a generation progress of the fourth image based on the generation progress. For example, the terminal device 120 may present the text "XX%" and the text "Estimated time: XX hours XX minutes" in the interface shown in the example 400C. For example, the terminal device 120 may switch to presenting other interfaces that may be provided by the application 120 in response to receiving a trigger operation for a determination control (for example, the control 404) in the example 400C. For example, the terminal device 120 may switch to presenting a content recommendation interface of the application 120 in response to detecting a trigger operation for the control 305.

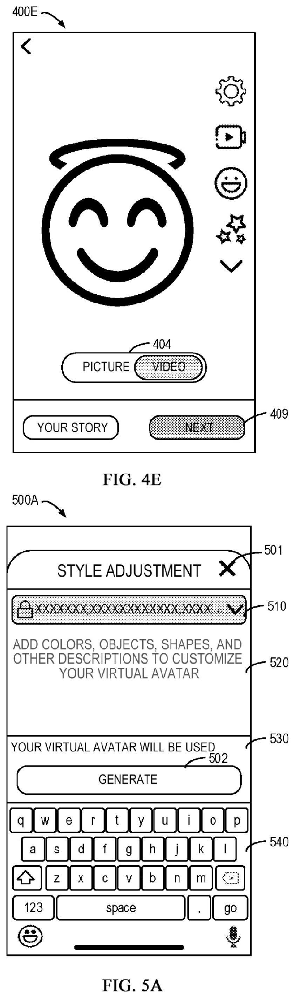

In response to the fourth image being generated, the terminal device 120 may provide an example 400D shown in FIG. 4D. The example 400D may be an example of a content preview interface for the fourth image. As shown in FIG. 4D, the terminal device 120 may present the fourth image in the example 400D. In this example, a plurality of fourth images are presented. The content preview interface may include a style adjustment entry (for example, the entry 405). The terminal device 120 may determine that a style adjustment instruction for the fourth image of the second virtual avatar having the adjusted first style is received in response to detecting a trigger operation for the style adjustment entry. That is, the user may re-adjust the adjusted first style. The example 400D also includes an operation control 406 and an operation control 407. For example, the terminal device 120 may re-generate all fourth images in the example 400D in response to receiving a trigger operation for the operation control 406. For example, the terminal device 120 may switch to presenting an example 400E shown in FIG. 4E in response to receiving a trigger operation for the operation control 407.

The example 400E is an example of a content editing interface of the fourth image. The interface shown in the example 400E includes an option for a posting format of the fourth image. For example, an operation control 404 is shown in the example 400E. The operation control 404 includes an option "picture" and an option "video". The terminal device 120 may determine to post the fourth image in a picture format in response to receiving a trigger operation for the option "picture". The terminal device 120 may determine to post the fourth image in a video format in response to receiving a trigger operation for the option "video". The example 400E may also include an operation control 409. The terminal device 120 may determine that an editing confirmation is received (that is, the editing of the fourth image is completed) in response to a trigger operation for the operation control 409, and switch to presenting the content posting interface for the fourth image. The terminal device 120 may receive a posting confirmation via the content posting interface for the fourth image. The terminal device 120 may then post the fourth image in response to receiving the posting confirmation. The content posting interface of the fourth image is similar to the content posting interface of the second image described above, and thus it will not be repeated.

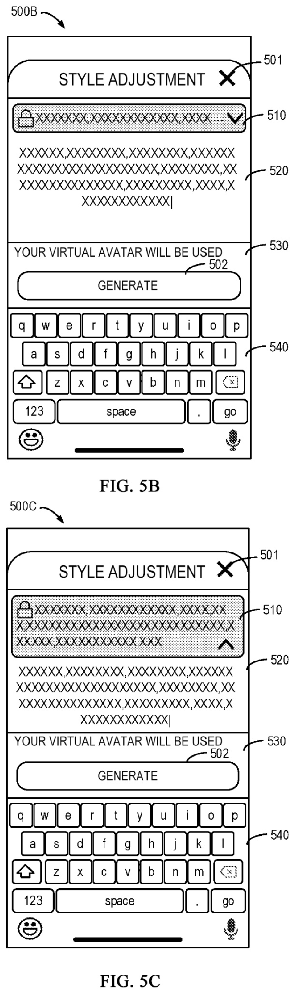

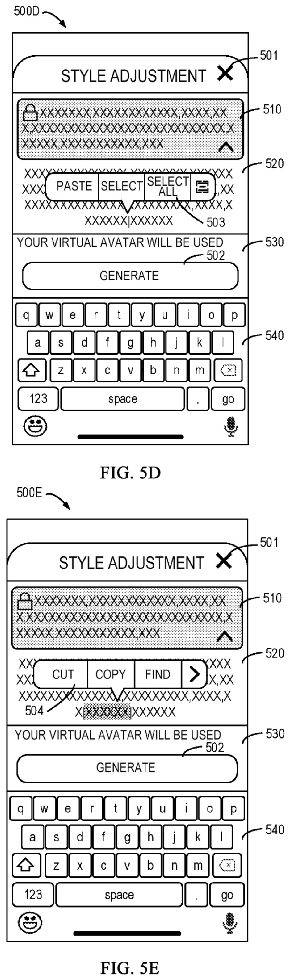

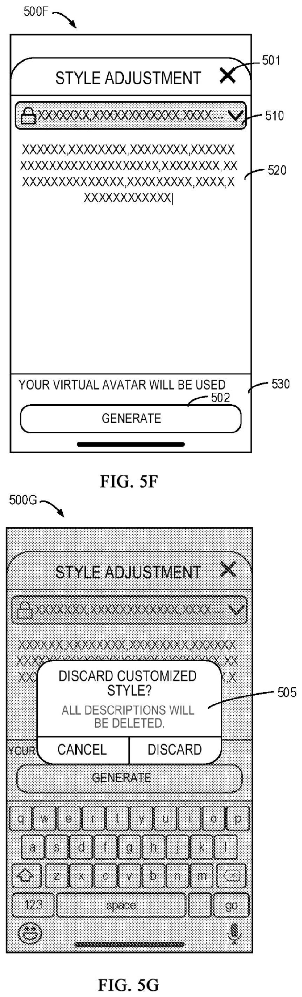

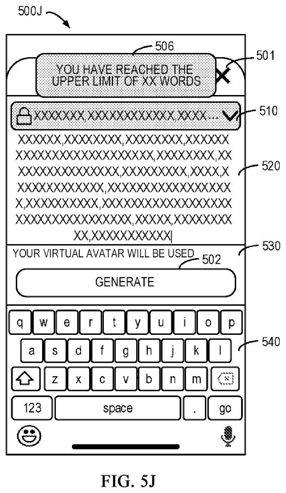

The example of adjusting the configuration information of the first style and obtaining the fourth image based on the adjusted configuration information is described above. Multiple examples of the style adjustment interface (that is, examples 500A to 500J) will be described in detail below with reference to FIGS. 5A to 5J.

For example, the terminal device 120 may present a style adjustment interface shown in the example 500A in response to receiving a trigger operation for a style adjustment entry (for example, the entry 311) in the content preview interface (for example, the example 300G shown in FIG. 3G). As shown in FIG. 5A, the example 500A may include an area 510. At least a part of fixed configuration information of the first style may be displayed in the area 510. It should be noted that in the case where the first style includes the fixed configuration information, the terminal device 120 may generate a prompt based on adjustment information for the first style and the fixed configuration information. The terminal device 120 may provide the prompt to a model for generating an image (that is, a target model). The terminal device 120 may obtain an output of the target model and obtain the fourth image based on the output.

The example 500A may also include a first input control 520, an area 530, and an input panel 540. The terminal device 120 may obtain the adjustment information input by the user via the input panel 540. In some embodiments, first prompt information for the adjustment information may be presented in the first input control 520. The first prompt information here indicates an adjustable part of the first style. The first prompt information here may be, for example, the text "Add colors, objects, shapes, and other descriptions to customize your virtual avatar" shown in the example 500A.

The example 500A also includes a cancel control 501. The terminal device 120 may determine to cancel adjusting the configuration information of the first style in response to receiving a trigger operation for the cancel control 501. For example, the terminal device 120 may return to presenting the content preview interface. The area 530 may include a generation control 502. The terminal device 120 may also, in response to detecting a trigger operation for the generation control 502, determine the adjusted first style based on the received adjustment information and the fixed configuration information and obtain the fourth image of the second virtual avatar having the adjusted first style. For example, the terminal device 120 may start to obtain the fourth image in response to receiving a trigger operation for the generation control 502.

As shown in FIG. 5B, the terminal device 120 may present the obtained adjustment information in the first input control 520 in the example 500B. For example, the terminal device 120 may also present all of the fixed configuration information of the first style in response to receiving a trigger operation for the control 510. Illustratively, the terminal device 120 may present an interface shown in the example 500C in response to receiving the trigger operation for the control 510 in the example 500B. The control 510 in the example 500C includes all of the fixed configuration information of the first style.

In the case where the adjustment information is obtained via the first input control 520, the terminal device 120 may also determine a position of an input indicator in the first input control 520. The input indicator here may be, for example, a symbol "|" in the first input control 520 in FIG. 5B. The terminal device 120 may present a menu 503 shown in the example 500D in response to the input indicator being located inside the adjustment information. The menu 503 may include a plurality of operation options for the adjustment information, such as an option "paste", an option "select", and an option "select all". For example, the terminal device 120 may also present a menu 504 shown in the example 500E in response to determining that part of the information in the adjustment information is selected. The menu 504 may include a plurality of operation options for the selected part of the adjustment information, such as an option "cut", an option "copy", and an option "find".

For example, the terminal device 120 may also present an interface shown in the example 500F in response to receiving a predetermined operation (for example, a cancel presentation operation for the input panel 540) for the style adjustment interface (for example, the example 500B). In the example 500F, the input panel 540 is no longer presented, and a presentation area of the first input control 520 is enlarged. For example, the terminal device 120 may also present an interface shown in the example 500G in response to receiving a predetermined operation (for example, a deletion operation) for the first input control 520. The interface of the example 500G includes a card 505. The card 505 includes prompt information prompting to confirm whether to delete the adjustment information. The card 505 also includes a cancel control and a discard control. The terminal device 120 may cancel deleting the adjustment information in response to receiving a trigger operation for the cancel control in the card 505. The terminal device 120 may delete the received adjustment information presented in the first input control 520 in response to receiving a trigger operation for the discard control in the card 505.

In some embodiments, if an image generation instruction associated with the adjustment information is received, the terminal device 120 may verify the received adjustment information. In other words, the terminal device 120 may determine whether the adjustment information satisfies a predetermined condition. The predetermined condition may relate to any suitable attribute related to the adjustment information, for example, whether the syntax of the text is correct, whether the word usage is appropriate, whether the number of words is less than a threshold, etc. For example, the terminal device 120 may, in response to receiving a trigger operation for the generation control 502, determine that the image generation instruction is received and verify the received adjustment information. In the process of verifying the adjustment information, the terminal device 120 may present an interface shown in the example 500H, for example. In the example 500H, the terminal device 120 may present prompt information indicating that verification is currently performed in the generation control 502. For example, the terminal device 120 may indicate that the verification is currently performed by presenting a specific interface element.

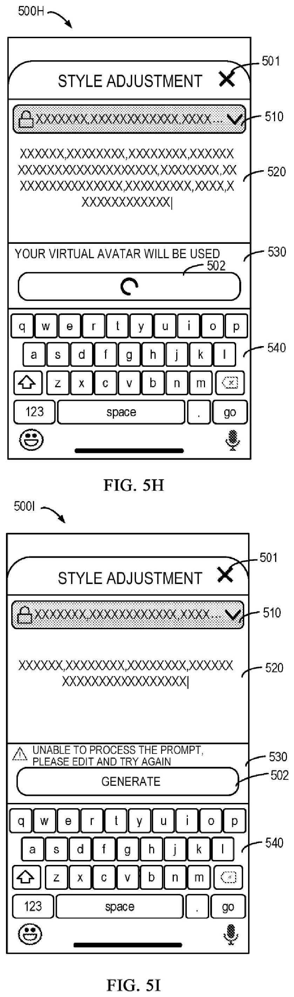

If the adjustment information satisfies the predetermined condition, that is, passes the verification, the terminal device 120 may obtain the fourth image based on the adjustment information and the fixed configuration information. If the adjustment information does not satisfy the predetermined condition, that is, fails to pass the verification, the terminal device 120 may present corresponding prompt information to indicate that the adjustment information fails to pass the verification. As shown in FIG. 5I, if the adjustment information fails to pass the verification, the terminal device 120 may present an example 500I. The terminal device 120 may present prompt information "Unable to process the prompt, please edit and try again" in the area 530 of the example 500I to prompt the user that the adjustment information fails to pass the verification.

In some embodiments, the terminal device 120 may also verify the adjustment information directly by default in response to receiving the adjustment information. As shown in FIG. 5H, if the adjustment information fails to pass the verification, the terminal device 120 may also present an example 500H. The terminal device 120 may present a pop-up window 506 in the example 500H. For example, the terminal device 120 may present prompt information "You have reached the upper limit of XX words" in the pop-up window to prompt the user that the adjustment information fails to pass the verification.

By verifying the adjustment information input by the user, the effectiveness of the adjustment may be ensured. This helps the user to adjust the style conveniently.

In such an embodiment, the user may adjust the existing style to obtain a style that satisfies his/her own preference. In this way, the threshold for style use is reduced, and the diversity of styles is also ensured.

Although in the above description, a request, instruction, or selection from the user is received or detected through an interface element such as a control and an entry, it would be appreciated that this is only illustrative. In some embodiments, there may be no such interface elements, but the request, instruction, or selection may be given in a natural language (including text or voice).

### EXAMPLE PROCESS

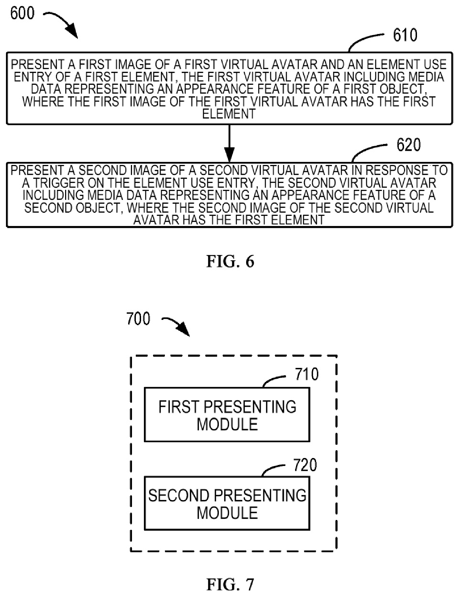

FIG. 6 illustrates a flowchart of a process 600 for image generation according to some embodiments of the present disclosure. The process 600 may be implemented at the terminal device 120. The process 600 is described below with reference to FIG. 1.

At block 610, the terminal device 120 presents a first image of a first virtual avatar and an element use entry of a first element, the first virtual avatar including media data representing an appearance feature of a first object, where the first image of the first virtual avatar has the first element.

At block 620, the terminal device 120 presents a second image of a second virtual avatar in response to a trigger on the element use entry, the second virtual avatar including media data representing an appearance feature of a second object, where the second image of the second virtual avatar has the first element.

In some embodiments, an element information interface of the first element is presented in response to the trigger on the element use entry, and the element information interface includes at least one of: a first image generation entry for the first element, or a respective viewing entry of at least one image having the first element; the second image is obtained based on an operation associated with the element information interface; and the second image is presented in response to obtaining the second image.

In some embodiments, obtaining the second image includes: obtaining, in response to a trigger on the first image generation entry, the second image based on the first element and the second virtual avatar.

In some embodiments, obtaining the second image includes: presenting a viewing interface of a third image of the at least one image in response to a trigger on a viewing entry of the third image, the viewing interface including a second image generation entry for the first element; and obtaining, in response to a trigger on the second image generation entry, the second image based on a third element of the third image and the second virtual avatar.

In some embodiments, the process 600 also includes: presenting an element adjustment interface in response to an element adjustment instruction for the second image; receiving adjustment information for the first element via the element adjustment interface; and presenting a fourth image of the second virtual avatar based on the received adjustment information, where the fourth image of the second virtual avatar has an adjusted first element.

In some embodiments, the element adjustment interface includes at least a part of fixed configuration information of the first element, and the process 600 also includes: obtaining the fourth image based on the received adjustment information and the fixed configuration information.

In some embodiments, the element adjustment interface includes at least one of: an input control for receiving the adjustment information; prompt information for the adjustment information, the prompt information indicating an adjustable part of the first element; or the second image.

In some embodiments, the process 600 also includes: ceasing displaying the second image in the element adjustment interface in response to a predetermined operation for the element adjustment interface; and enlarging a presentation area of the input control.

In some embodiments, the element adjustment instruction is received by: presenting a content preview interface, the content preview interface including the second image and an element adjustment entry; and receiving the element adjustment instruction via the element adjustment entry.

In some embodiments, the process 600 also includes: presenting a content editing interface for the second image in response to a posting instruction for the second image; presenting a content posting page for the second image in response to receiving an editing confirmation via the content editing interface; and posting the second image in response to receiving a posting confirmation via the content posting page.

In some embodiments, the content editing interface includes an option for a posting format of the second image.

In some embodiments, the process 600 also includes: presenting an image obtaining interface in response to an avatar creation instruction; determining a plurality of images of the second object in response to at least one of the following operations via the image obtaining interface: a selection operation of a captured image, or an image capturing operation; and obtaining the second virtual avatar based on the plurality of images in response to an avatar creation confirmation.

In some embodiments, the avatar creation instruction is received by: presenting an avatar creation entry for the second virtual avatar in response to the trigger on the element use entry; and receiving the avatar creation instruction via the avatar creation entry.

In some embodiments, the first element includes a parent element and a child element, and the child element is obtained by partially adjusting the parent element.

In some embodiments, the parent element includes at least one of: a predetermined element or a user-customized element.

In some embodiments, the first element includes at least one of an image style, an image background or an image foreground.

### EXAMPLE APPARATUS AND DEVICE

The embodiments of the present disclosure also provide a corresponding apparatus for implementing the above method or process. FIG. 7 illustrates a schematic structural block diagram of an apparatus 700 for image generation according to some embodiments of the present disclosure. The apparatus 700 may be implemented as or included in the terminal device 120. Each module/component in the apparatus 700 may be implemented by hardware, software, firmware, or any combination thereof.

As shown in FIG. 12, the apparatus 700 includes a first presenting module 710 configured to present a first image of a first virtual avatar and an element use entry of a first element, the first virtual avatar including media data representing an appearance feature of a first object, where the first image of the first virtual avatar has the first element. The apparatus 700 also includes a second presenting module 720 configured to present a second image of a second virtual avatar in response to a trigger on the element use entry, the second virtual avatar including media data representing an appearance feature of a second object, where the second image of the second virtual avatar has the first element.

In some embodiments, the second presenting module 720 is further configured to: present an element information interface of the first element in response to the trigger on the element use entry, the element information interface including at least one of a first image generation entry for the first element or a respective viewing entry of at least one image having the first element; obtain the second image based on an operation associated with the element information interface; and present the second image in response to obtaining the second image.

In some embodiments, the second presenting module 720 is further configured to: obtain, in response to a trigger on the first image generation entry, the second image based on the first element and the second virtual avatar.

In some embodiments, the second presenting module 720 is further configured to: present a viewing interface of a third image of the at least one image in response to a trigger on a viewing entry of the third image, the viewing interface including a second image generation entry for the first element; and obtain, in response to a trigger on the second image generation entry, the second image based on a third element of the third image and the second virtual avatar.

In some embodiments, the second presenting module 720 is further configured to: present an element adjustment interface in response to an element adjustment instruction for the second image; receive adjustment information for the first element via the element adjustment interface; and present a fourth image of the second virtual avatar having the adjusted first element based on the received adjustment information.

In some embodiments, the element adjustment interface includes at least a part of fixed configuration information of the first element, and the apparatus 700 also includes an image obtaining module configured to: obtain the fourth image based on the received adjustment information and the fixed configuration information.

In some embodiments, the element adjustment interface includes at least one of: an input control for receiving the adjustment information; prompt information for the adjustment information, the prompt information indicating an adjustable part of the first element; or the second image.

In some embodiments, the second presenting module 720 is further configured to: cease displaying the second image in the element adjustment interface in response to a predetermined operation for the element adjustment interface; and enlarge a presentation area of the input control.

In some embodiments, the element adjustment instruction is received by: presenting a content preview interface, the content preview interface including the second image and an element adjustment entry; and receiving the element adjustment instruction via the element adjustment entry.

In some embodiments, the second presenting module 720 is further configured to: present a content editing interface for the second image in response to a posting instruction for the second image; and present a content posting page for the second image in response to receiving an editing confirmation via the content editing interface, and the apparatus 700 also includes a posting module configured to: post the second image in response to receiving a posting confirmation via the content posting page.

In some embodiments, the content editing interface includes an option for a posting format of the second image.

In some embodiments, the apparatus 700 also includes: an interface presenting module configured to present an image obtaining interface in response to an avatar creation instruction; an image obtaining module configured to determine a plurality of images of the second object in response to at least one of the following operations via the image obtaining interface: a selection operation of a captured image or an image capturing operation; and an image obtaining module configured to obtain the second virtual avatar based on the plurality of images in response to an avatar creation confirmation.

In some embodiments, the avatar creation instruction is received by: presenting an avatar creation entry for the second virtual avatar in response to the trigger on the element use entry; and receiving the avatar creation instruction via the avatar creation entry.

In some embodiments, the first element includes a parent element and a child element, and the child element is obtained by partially adjusting the parent element.

In some embodiments, the parent element includes at least one of a predetermined element or a user-customized element.

In some embodiments, the first element includes at least one of an image style, an image background or an image foreground.

The units and/or modules included in the apparatus 700 may be implemented in various ways, including software, hardware, firmware, or any combination thereof. In some embodiments, one or more units and/or modules may be implemented using software and/or firmware, such as machine executable instructions stored on a storage medium. In addition to machine executable instructions or as an alternative, some or all units and/or modules in the apparatus 700 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and the like.

It would be appreciated that one or more steps in the above method may be performed by a suitable electronic device or a combination of electronic devices. Such an electronic device or a combination of electronic devices may include, for example, the terminal device 120 and the server 130 in FIG. 1.

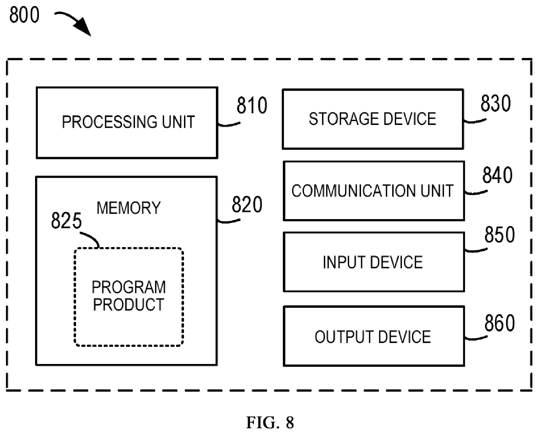

FIG. 8 illustrates a block diagram of an electronic device 800 in which one or more embodiments of the present disclosure may be implemented. It would be appreciated that the electronic device 800 shown in FIG. 8 is only illustrative, and should not constitute any limitation on the function and scope of the embodiments described herein. The electronic device 800 shown in FIG. 8 may be used to implement the terminal device 120 of FIG. 1 or the apparatus 1200 of FIG. 12.

As shown in FIG. 8, the electronic device 800 is in the form of a general electronic device. The components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and may execute various processes based on the programs stored in the memory 820. In a multiprocessor system, multiple processing units execute computer executable instructions in parallel to improve the parallel processing capability of the electronic device 800.

The electronic device 800 generally includes multiple computer storage medium. Such medium may be any available medium that is accessible by the electronic device 800, including but not limited to volatile and non-volatile medium, removable and non-removable medium. The memory 820 may be volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 830 may be a removable or non-removable medium, and may include a machine-readable medium such as a flash drive, a disk, or any other medium, which may be used to store information and/or data and may be accessed within the electronic device 800.

The electronic device 800 may further include additional removable/non-removable, volatile/non-volatile memory medium. Although not shown in FIG. 8, a disk drive for reading from or writing into a removable, non-volatile disk (such as a "floppy disk"), and an optical disk drive for reading from or writing into a removable, non-volatile optical disk may be provided. In these cases, each drive may be connected to the bus (not shown) by one or more data medium interfaces. The memory 820 may include a computer program product 825, which has one or more program modules configured to perform various methods or acts of various embodiments of the present disclosure.

The communication unit 840 implements communication with other electronic devices through a communication medium. Additionally, the functions of the components of the electronic device 800 may be implemented by a single computing cluster or multiple computing machines, which may communicate through communication connections. Therefore, the electronic device 800 may use a logical connection with one or more other servers, a network personal computer (PC) or another network node to operate in a networked environment.

The input device 850 may be one or more input devices, such as a mouse, a keyboard, a tracking ball, etc. The output device 860 may be one or more output devices, such as a display, a speaker, a printer, etc. The electronic device 800 may also communicate with one or more external devices (not shown) through the communication unit 840 as needed, the external device such as a storage device, a display device, etc., communicates with one or more devices that enable the user to interact with the electronic device 800, or communicates with any devices (for example, a network card, a modem, etc.) that enable the electronic device 800 to communicate with one or more other electronic devices. Such communication may be performed via input/output (I/O) interfaces (not shown).

According to an example implementation of the present disclosure, there is provided a computer-readable storage medium having computer executable instructions stored thereon, where the computer executable instructions are executed by a processor to implement the method described above. According to an example implementation of the present disclosure, there is also provided a computer program product tangibly stored on a non-transitory computer-readable medium and including computer executable instructions, and the computer executable instructions are executed by a processor to implement the method described above.

Various aspects of the present disclosure are described herein with reference to flowcharts and/or block diagrams of methods, apparatuses, devices and computer program products implemented according to the present disclosure. It would be appreciated that each block of the flowchart(s) and/or block diagram(s), and combinations of blocks in the flowchart(s) and/or block diagram(s), may be implemented by computer readable program instructions.

These computer readable program instructions may be provided to a processing unit of a general purpose computer, a special purpose computer, or other programmable data processing apparatus to produce a machine, such that the instructions, when executed by the processing unit of the computer or other programmable data processing apparatus, produce an apparatus for implementing the functions/acts specified in one or more blocks of the flowchart(s) and/or block diagram(s). These computer readable program instructions may also be stored in a computer readable storage medium, the instructions cause the computer, the programmable data processing apparatus, and/or other devices to work in a specific manner, and thus, the computer readable medium storing the instructions includes a manufactured product, which includes instructions for implementing various aspects of the functions/acts specified in one or more blocks of the flowchart(s) and/or block diagram(s).

The computer readable program instructions may be loaded onto a computer, another programmable data processing apparatus, or other devices, causing a series of operation steps to be performed on the computer, other programmable data processing apparatus or other devices to produce a computer-implemented process, such that the instructions executed on the computer, other programmable data processing apparatus, or other devices implement the functions/acts specified in one or more blocks of the flowchart(s) and/or block diagram(s).

The flowcharts and block diagrams in the drawings show the possibly implemented architectures, functions, and operations of the system, method and computer program product according to multiple implementations of the present disclosure. In this regard, each block in the flowchart(s) or block diagram(s) may represent a module, a program segment, or a part of an instruction, which includes one or more executable instructions for implementing the specified logical functions. In some alternative implementations, the functions marked in the block may also occur in an order different from that marked in the drawings. For example, two consecutive blocks may actually be performed substantially in parallel, or they may sometimes be performed in the reverse order, depending on the functions involved. It should also be noted that each block in the block diagram(s) and/or flowchart(s), and the combination of blocks in the block diagram(s) and/or flowchart(s), may be implemented by a special purpose hardware-based system that performs the specified functions or acts, or may be implemented by a combination of special purpose hardware and computer instructions.

The implementations of the present disclosure have been described above, and the above description is illustrative, non-exhaustive, and not limited to the disclosed implementations. Without departing from the scope and spirit of the illustrated implementations, many modifications and changes would be apparent to those of ordinary skill in the art. The choice of terms used herein is intended to best explain the principles of the implementations, the practical applications, or improvements to the technologies in the market, or to enable other ordinary skilled person in the art to understand the implementations disclosed herein.

## Claims

1. A method of image generation, comprising:
presenting a first image of a first virtual avatar and an element use entry of a first element, the first virtual avatar comprising media data representing an appearance feature of a first object, wherein the first image of the first virtual avatar has the first element; and
presenting a second image of a second virtual avatar in response to a trigger on the element use entry, the second virtual avatar comprising media data representing an appearance feature of a second object, wherein the second image of the second virtual avatar has the first element.

2. The method of claim 1, wherein presenting the second image comprises:
presenting an element information interface of the first element in response to the trigger on the element use entry, the element information interface comprising at least one of:
a first image generation entry for the first element, or
a respective viewing entry of at least one image having the first element;
obtaining the second image based on an operation associated with the element information interface; and
presenting the second image in response to obtaining the second image.

3. The method of claim 2, wherein obtaining the second image comprises:
obtaining, in response to a trigger on the first image generation entry, the second image based on the first element and the second virtual avatar.

4. The method of claim 2, wherein obtaining the second image comprises:
presenting a viewing interface of a third image of the at least one image in response to a trigger on a viewing entry of the third image, the viewing interface comprising a second image generation entry for the first element; and
obtaining, in response to a trigger on the second image generation entry, the second image based on the third element of the third image and the second virtual avatar.

5. The method of claim 1, further comprising:
presenting an element adjustment interface in response to an element adjustment instruction for the second image;
receiving adjustment information for the first element via the element adjustment interface; and
presenting a fourth image of the second virtual avatar based on the received adjustment information, wherein the fourth image of the second virtual avatar has an adjusted first element.

6. The method of claim 5, wherein the element adjustment interface comprises at least a part of fixed configuration information of the first element, and the method further comprises:
obtaining the fourth image based on the received adjustment information and the fixed configuration information.

7. The method of claim 5, wherein the element adjustment interface comprises at least one of:
an input control for receiving the adjustment information,
prompt information for the adjustment information, the prompt information indicating an adjustable part of the first element, or
the second image.

8. The method of claim 7, further comprising:
ceasing displaying the second image in the element adjustment interface in response to a predetermined operation for the element adjustment interface; and
enlarging a presentation area of the input control.

9. The method of claim 1, wherein the element adjustment instruction is received by:
presenting a content preview interface, the content preview interface comprising the second image and an element adjustment entry; and
receiving the element adjustment instruction via the element adjustment entry.

10. The method of claim 1, further comprising:
presenting a content editing interface for the second image in response to a posting instruction for the second image;
presenting a content posting page for the second image in response to receiving an editing confirmation via the content editing interface; and
posting the second image in response to receiving a posting confirmation via the content posting page.

11. The method of claim 10, wherein the content editing interface comprises an option for a posting format of the second image.

12. The method of claim 1, further comprising:
presenting an image obtaining interface in response to an avatar creation instruction;
determining a plurality of images of the second object in response to at least one of the following operations via the image obtaining interface:
a selection operation of a captured image, or
an image capturing operation; and
obtaining the second virtual avatar based on the plurality of images in response to an avatar creation confirmation.

13. The method of claim 12, wherein the avatar creation instruction is received by:
presenting an avatar creation entry for the second virtual avatar in response to the trigger on the element use entry; and
receiving the avatar creation instruction via the avatar creation entry.

14. The method of claim 1, wherein the first element comprises a parent element and a child element, and the child element is obtained by partially adjusting the parent element.

15. The method of claim 14, wherein the parent element comprises at least one of:
a predetermined element, or
a user-customized element.

16. The method of claim 1, wherein the first element comprises at least one of an image style, an image background or an image foreground.

17. An apparatus for image generation, comprising:
a first presenting module configured to present a first image of a first virtual avatar and an element use entry of a first element, the first virtual avatar comprising media data representing an appearance feature of a first object, wherein the first image of the first virtual avatar has the first element; and
a second presenting module configured to present a second image of a second virtual avatar in response to a trigger on the element use entry, the second virtual avatar comprising media data representing an appearance feature of a second object, wherein the second image of the second virtual avatar has the first element.

18. An electronic device, comprising:
at least one processing unit; and
at least one memory coupled to the at least one processing unit and storing instructions executable by the at least one processing unit, the instructions, when executed by the at least one processing unit, causing the electronic device to perform the method of any of claims 1 to 16.

19. A computer-readable storage medium having a computer program stored thereon, the computer program being executable by a processor to implement the method of any of claims 1 to 16.
